# EUROPEAN PATENT APPLICATION

(11) **EP 1 542 113 A1**
(43) Date of publication of application: **15.06.2005**
(21) Application number: 03028374.1
(22) Date of filing: 10.12.2003
(51) Int. Cl.: G06F 1/00, G06F 17/60

(54) **Software payment system**

(71) Applicant: SAP Aktiengesellschaft, 69190 Walldorf (DE)
(72) Inventor: Verlaan, Theo, 69168 Wiesloch (DE)

(57) **Abstract**

Computer implemented method for payment of use of software in a business processes supporting computer system (400) comprising processing at least one workflow comprising subsequent workflow steps (110-170) defining at least one billing action for at least one of the workflow steps, carrying out the at least one billing action in response to the processing of the associated workflow step, carrying out the at least one billing action comprises sending a billing instruction to a billing engine and a decoding request to a coding engine (220) and decoding a program section using a decoding key received from the coding engine on the decoding request.

## Description

The invention relates to a computer-implemented method for payment for software use.

Known methods of payment for software include software licenses, which give the right to use certain software for a predetermined period of time, sometimes in combination with a predetermined number of users. Management of license payments for software can be complex, both for the licensee and licensor. It is an object of the invention to provide for an alternative method for payment for software use.

To achieve this goal the invention provides for a method according to claim 1.

Further embodiments of the invention are the subject of the dependent claims.
Further objects, aspects and advantages of the invention will be better understood from the following detailed description of a preferred embodiment of the invention with reference to the drawing, in which:

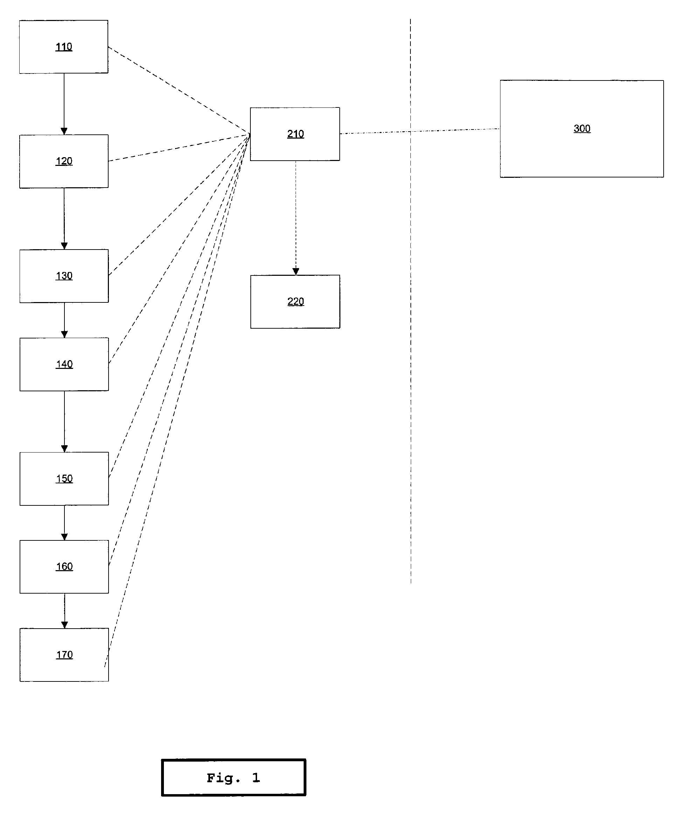

Fig. 1 shows schematically an example of an embodiment of a method according to the invention, and

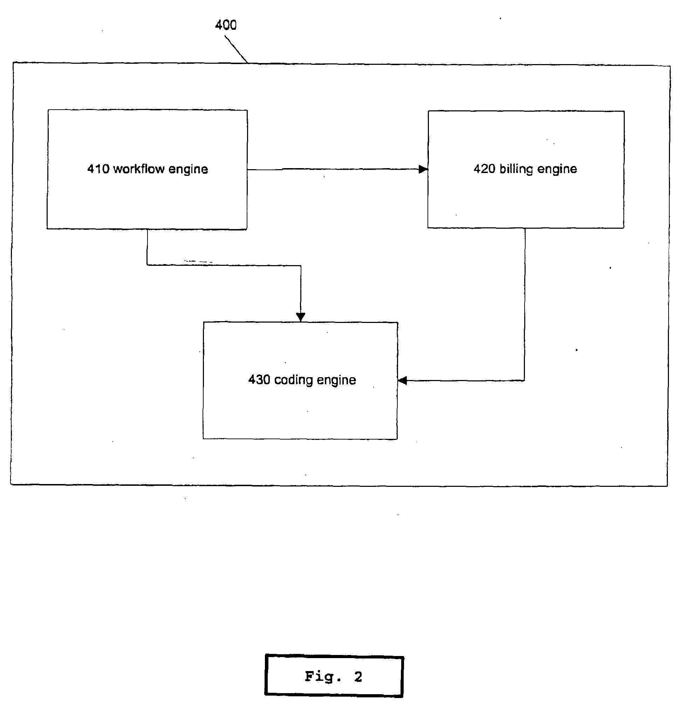

Fig. 2 shows schematically an example of an embodiment of a system according to the invention.

In an example of an embodiment of the invention, a business support computer system 400 is provided for, the system 400 being provided with one or more software applications for business processes. With such a system numerous business processes can be controlled, for example finance, controlling, purchases, sales, production, and planning. The business support computer systems are implemented in a computer landscape, which can be implemented in any suitable fashion, such as for example a single computer implementation or a large number of computer systems connected through various communication links. The business process applications running on the computer landscape can receive and process data from external parties that are connected to any of the systems within the landscape.

Typically implementations of business processes involve workflows, i.e. sequences of subsequent and/or parallel procedural steps for completing a specific business process. Workflows can be for example predefined (such as for example best practice workflows), or can for example be dynamically adaptable. The workflows are modeled in the business support system.

The computer system 400 is in this example provided with a workflow engine 410, a billing engine 420, and a coding engine 430. Typically, the computer system 400 is provided with a database system to store and retrieve information, which database system is also accessible for the workflow engine.

The workflow engine 410 is in this example provided with multiple workflows, which can be executed by the workflow engine. Workflow engines as such are known in the art. Typically, the workflow engine manages and monitors the execution of the various workflows. Any number of workflows can be used, from one to many. For each workflow, subsequent steps are defined. Workflows having any number of steps can be used. In this example, for each workflow a billing action is defined. Note that the invention is not limited to this application, but can also be implemented so that at least one workflow is provided with a billing action, and one or more workflows are not provided with a billing action. Furthermore, the invention can be implemented with more than one billing action per workflow.

The workflows that can be processed by the workflow engine have at least one step in them that is associated with a billing action. Note that a workflow can have one or more billing action associated with one of the workflow steps. The workflow engine can also have workflows that are not associated with a billing action.

The billing engine 420 is in this embodiment implemented to manage payments. The billing engine receives instructions or commands for effecting payments in the form of billing actions. These billing actions or instructions can comprise information related to an amount or quantity in units, a monetary value or a workflow type, or a billing action type, such as for example debit payment. With an indication in units, the billing engine can be provided with information relating to the monetary value of a unit. With an indication of the workflow type, the billing engine can be provided with information relating to the monetary value of specific workflow types. In a further embodiment of the invention, the indication of value in the billing action can be variable, and can for example be coupled to an economic value of the specific workflow step. On receipt of a billing action, the billing engine can determine based on the information in the billing action how to process the billing action.

The billing engine can be implemented to effect payments, for example by debiting an account of the user or an electronic payment. Any suitable type of payment can be implemented such as for example prepaid technology, web services, electronic voucher systems, (electronic) token systems. In another embodiment of the invention, the billing engine records costs associated with the workflow use. The accumulated costs are later read and processed further, by for example compiling an invoice.

The coding engine 430 is in this embodiment implemented to provide decoding information, such as for example decryption keys.

In one embodiment of the invention, the code to process the workflow steps 110-170 is encrypted, in such a way that the workflow cannot be continued without the proper decoding key. To this end the decripting engine 210 retrieves a special key online from the software vendor or any suitable management entity 300 to decript the code and activate it. For example, the billing action can comprise sending a decoding request to a coding engine 220. The program section can then be decoded using a decoding key received from the coding engine 220 on the decoding request. Encryption methods that can be used are well known. The decription system could also be implemented in a webservice.

In a further embodiment of the invention, an encryption of the workflow engine is provided for. This means that the workflow engine needs a decryption code to process a workflow, or a part of a workflow. This can be done for example by encryption of the actual code to be processed, or by integrating a processing lock in the workflow engine that needs a processing code to proceed. Suitable methods of encryption are known in the art. The invention provides for encrypted code for modules and functions to be installed with the end user; a billing/decripting engine is also provided for. The encrypted code can be decripted using the decripting engine 210. In one embodiment of the invention, the code to process the workflow steps is encrypted, in such a way that the workflow cannot be continued without the proper decoding key. To this end the decripting engine retrieves a special key online from the software vendor or any suitable management entity 300 to decript the code and activate it. For example, the billing action can comprise sending a decoding request to a coding engine. The program section can then be decoded using a decoding key received from the coding engine on the decoding request. Encryption methods that can be used are well known. The decription system could also be implemented in a webservice.

In one embodiment of the invention, the processing of the workflow can be stopped until confirmation of the completion of the billing instruction is received. Other workflows can be further processed. In another embodiment, the processing of all workflows can be stopped, optionally only leaving free workflows (i.e. workflows without an associated billing action) to be processed.

In the use the workflow engine processes a workflow step from a specific workflow. When executing a workflow step that is associated with a billing action, that billing action is carried out, for example by the billing action engine.
This can be done by for example sending a billing instruction to a billing engine.

In one embodiment of the invention, the processing of the workflow can be stopped until confirmation of the completion of the billing instruction is received. Other workflows can be further processed. In another embodiment, the processing of all workflows can be stopped, optionally only leaving free workflows (i.e. workflows without an associated billing action) to be processed.

The triggering of the billing action can be predetermined, and can be associated with a workflow step. For example, the trigger can occur when starting the workflow step, or during the processing or when finishing the process.

In one embodiment of the invention, the billing action is defined for a workflow step associated with an economic activity of a user, for example a revenue generating activity. With such a workflow step income for the end user is generated, such as for example sending confirmation of order, sending a bill, recording payment received. The billing amount can be adjusted to reflect the economic value of the transaction. For example a fixed percentage of the transaction fee.

In one embodiment of the invention, the billing action is customized for an individual customer. The specific economic conditions of the business processes for the customer can be used as a basis for payment. This can make it possible to optimize the performance for both the customer and the seller of business software.

In one embodiment of the invention, multiple workflow processes are implemented. Billing action can be associated with a particular workflow. This can for example be used to differentiate between workflows, for example leverage a higher fee for a seldom-used workflow.

The activation of a workflow section can be permanent or limited in time or number of calls made to the released module. The billing engine further can decript specific workflows or functions, and bill when a workflow is finished or a function is called.

Additionally, a fee can be charged for the first use of a specific function or workflow. Other payment models could include that a basic set of workflows and functions is unrestricted usable (optionally for a lumpsum fee), and that additional (for example more complex) functionalilty costs extra, using the decription mechanism.

Payment now is directly related to the functionality actually used, and in particular in the case of payment via workflows and function calls, directly related to the economic activity of the end user. This makes the payment model very acceptable to the end user, and the vendor gets paid according to whether how succesfull his implemented business models are.

In one embodiment of the invention, the billing action can be coupled to the role of the user. For example, for a particular role, there is no billing action or for another particular role there is an extra billing action. The costs can so be attributed to the worth for the customer, based on the role.

As payments are now distributed over many components and workflows, the costs can be easily attributed to various internal costcenters of the customer, making more accurate bookkeeping possible.

The method and system can be used within a computer landscape such as an enterprise resource planning system (ERP). Business processes within enterprises are often controlled using computer-implemented systems such as ERP (Enterprise Resource Planning) systems. An example of such an ERP system is the integrated business solution mySAP.com made by SAP AG. Within such a system a number of business processes can be controlled, for example human resources, finance, controlling, purchases, sales, production, and planning.

In one embodiment of the invention, the data related to payment for software use is stored. The stored information can be analysed to get a better understanding of the business processes as they are actually performed by the users. Based on this information, for example prices can be adjusted, non used functionality abandoned or existing processes improved.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network (LAN) and a wide area network (WAN), e.g., the Internet.
The computing system can include clients and servers. A client and server are generally remote from each other and typically interact through a communication network. The relationship of client and server arises by virtue of computer programs running on the respective computers and having a client-server relationship to each other.

The invention further relates to a program storage device readable by a computer system, embodying a program of instructions executable by the computer system to perform any method according to the invention. As this invention may be embodied in several forms without departing from the spirit of essential characteristics thereof, the present embodiment is therefore illustrative and not restrictive, since the scope of the invention is defined by the appended claims rather than by the description preceding them, and all changes that fall within the metes and bounds of the claims, or equivalence of such metes and bounds thereof are therefore intended to be embraced by the claims.

## Claims

1. Computer implemented method for payment of use of software in a business processes supporting computer system, comprising processing at least one workflow comprising subsequent workflow steps, defining at least one billing action for at least one of said workflow steps and carrying out said at least one billing action in response to the processing of the associated workflow step.

2. Method according to claim 1, wherein carrying out said at least one billing action comprises sending a billing instruction to a billing engine.

3. Method according to claim 1 or 2, wherein carrying out said at least one billing action comprises sending a decoding request to a coding engine.

4. Method according to claim 3, further comprising decoding a program section using a decoding key received from the coding engine on the decoding request.

5. Method according to claim 2, further comprising stopping the processing of the workflow until confirmation of the completion of the billing instruction is received.

6. Method according to any of the preceding claims, wherein the billing instruction comprises debiting an account.

7. Method according to any of the preceding claims, wherein the billing instruction comprises an electronic payment.

8. Method according to any of the preceding claims, wherein the at least one billing action is defined for a workflow step associated with an economic activity of a user.

9. Method according to claim 8, wherein the economic activity is a revenue generating activity.

10. Program storage device readable by a computer system, embodying a program of instructions executable by the computer system to perform a method according to any of claims 1-9.
